# EUROPÄISCHE PATENTSCHRIFT

(11) **EP 1 561 635 B1**
(45) Veröffentlichungstag und Bekanntmachung des Hinweises auf die Patenterteilung: **26.03.2008**
(21) Anmeldenummer: 05002432.2
(22) Anmeldetag: 04.02.2005
(51) Int. Cl.: B60N 2/44

(54) **Aufblasbare Einheit**
Inflatable assembly
Ensemble gonflable

(30) Priorität: 06.02.2004 DE 102004005841
(43) Veröffentlichungstag der Anmeldung: 10.08.2005
(73) Patentinhaber: ADAM OPEL AG, 65423 Rüsselsheim (DE)
(72) Erfinder: Baccelli, Gian Luca, 65232 Taunusstein-Orlen (DE); Fries, Armin-Lutz, 64293 Darmstadt (DE); Lungershausen, Dirk Rainer, 65207 Wiesbaden (DE)

(56) Entgegenhaltungen:
- DE-A1- 2 062 250
- FR-A- 2 293 170

## Beschreibung

Die Erfindung betrifft eine aufblasbare Einheit für einen Sitz, insbesondere für einen Kraftfahrzeugsitz, mit mindestens einem Modul mit einer Umhüllung, wobei in Gebrauchslage die Umhüllung mit einem Fluid, insbesondere mit Luft, gefüllt ist, und in einer Nichtgebrauchslage das Modul fluidlos ist.

Gemäß der DE 198 06 535 C2 ist eine Vorrichtung gemäß dem Oberbegriff des Anspruchs 1 zum automatischen Einstellen des Komforts eines Kraftfahrzeugsitzes beschrieben. Dieser Kraftfahrzeugsitz umfasst hierbei mehrere angeordnete fluidfüllbare Blasen sowie ein Fluiddruckeinstellungssystem auf, um den Durchgang eines Fluids in ausgewählte Blasen der Blasen hinein oder aus diesen heraus einzustellen. Die Blasen sind hierbei innerhalb des Lehnenteils und des Sitzteils des Kraftfahrzeugsitzes angeordnet, wobei das Luftdruckeinstellungssystem den Luftdruck in den Blasen automatisch verändern kann. Wird der bekannte Sitz durch ein Verschwenken und/oder Verschieben des Lehnenteils und/oder des Sitzteils in die Nichtgebrauchslage überführt, nimmt der Sitz trotz fluidloser Blasen soviel Platz innerhalb des Kraftfahrzeuges ein, wodurch das Ladevolumen erheblich eingeschränkt ist.

Zum allgemeinen technischen Verständnis wird noch auf die US 38 04 848 und DE 299 24 138 U1 verwiesen.

Es ist Aufgabe der vorliegenden Erfindung eine aufblasbare Einheit für einen Sitz bereit zu stellen, mit der die oben genannten Nachteile vermieden werden, insbesondere eine einfache und flexible aufblasbare Einheit geschaffen wird.

Die Aufgabe wird durch eine aufblasbare Einheit mit den Merkmalen des Anspruches 1 gelöst. In den abhängigen Ansprüchen sind bevorzugte Weiterbildungen der erfindungsgemäßen aufblasbaren Einheit angegeben.

Es ist erfindungsgemäß vorgesehen, dass das Modul eine Umhüllung aufweist, in der ein Verstärkungselement und ein Schaumstoff angeordnet sind, und das Verstärkungselement mit mindestens einer Vertiefung ausgebildet ist, in der der Schaumstoff in Nichtgebrauchslage zumindest teilweise aufgenommen ist. Wird Luft aus der aufblasbaren Einheit evakuiert, erreicht das Modul nach einer festgelegten Zeit die Nichtgebrauchslage, wobei der Schaumstoff zumindest teilweise sich in die Vertiefung zurückzieht. Die Vertiefung ist hierbei entsprechend der Kontur des Schaumstoffes angepasst, die der Schaumstoff in Gebrauchslage der aufblasbaren Einheit einnimmt. Vorzugsweise ist die Kontur der Vertiefung spiegelförmig zur Kontur des Schaumstoffes ausgebildet. Vorzugsweise nimmt das evakuierte Modul eine flache Kontur an der Oberfläche ein. In Nichtgebrauchslage zeichnet sich somit die erfindungsgemäße Einheit durch eine kompakte, ein geringes Volumen einnehmende Anordnung aus. Zweckmäßigerweise ist die erfindungsgemäße Einheit als Sitzteil und/oder als Lehnenteil eines Kraftfahrzeugsitzes ausgebildet. In Gebrauchslage, d. h. wenn Luft mit einem bestimmten Druck sich innerhalb des Moduls befindet, weist der Schaumstoff eine dreidimensionale Form (konkav) entsprechend dem Design- oder Stylingvorgaben für Sitze auf. In einer bevorzugten Ausführungsform der Erfindung weist hierbei die aufblasbare Einheit mehrere Module (Kammern) auf, die am Lehnenteil sowie am Sitzteil angeordnet sind. Entsprechend den Anforderungen können die Module unterschiedliche dreidimensionale Formen annehmen, welches insbesondere durch den eingesetzten Schaumstoff innerhalb der Umhüllung des jeweiligen Moduls erzielt wird. Der Druck innerhalb der Module kann ebenfalls unterschiedlich gewählt sein. Um eine möglichst große Ladefläche innerhalb des Kraftfahrzeuges zu erreichen, wird Luft aus den Modulen entnommen, wodurch sich die aufblasbare Einheit volumenmäßig erheblich reduziert. Anschließend kann das Sitzteil und das Lehnenteil in eine Nichtgebrauchslage verschwenkt und/oder verschoben werden, wodurch eine große Ladefläche innerhalb des Kraftfahrzeuges entsteht.

In einer bevorzugten Ausführungsform der Erfindung ist die Umhüllung als eine Folie ausgebildet die aus Kunststoff, insbesondere aus Polyurethan besteht. Die Folie kann hierbei elastische oder aber auch weniger elastische Eigenschaften aufweisen. Das verstärkungselement, welches durch die Umhüllung umfasst ist, kann hierbei eine erste und eine zweite Seite aufweisen. Hierbei liegt die zweite Seite unmittelbar an der Umhüllung an, wobei die erste Seite den Schaumstoff zugewandt ist. Zweckmäßigerweise ist der Schaumstoff offenporig ausgebildet, damit beim Evakuieren des jeweiligen Moduls die Luft möglichst schnell aus den Hohlkammern bzw. Poren des Schaumstoffes entweichen kann. Der Schaumstoff kann beispielsweise ein Polyurethan sein oder aus einem Material bestehen, welches gut Luft evakuieren oder Eigenschaften aufweist.

Zweckmäßigerweise ist die zweite Seite des Verstärkungselementes mit der Umhüllung verklebt. Andere kraftschlüssige, formschlüssige oder stoffschlüssige Verbindungen sind alternativ selbstverständlich möglich. Das Verstärkungselement kann hierbei aus einem Kunststoff oder aus einem Metall ausgebildet sein. Die zweite Seite des Verstärkungselements ist hierbei an einem Trägerelement des Kraftfahrzeuges befestigbar. Das Trägerelement stellt hierbei eine Unterkonstruktion des Sitzes dar. Die Verbindung des Verstärkungselementes am Trägerelement kann formschlüssig und/oder kraftschlüssig und/oder stoffschlüssig realisiert werden.

Auf der Umhüllung kann vorzugsweise ein Bezugsstoff angeordnet sein, der über die einzelnen Module überspannt ist. Bei einer alternativen Ausführungsform kann es sich bei dem Bezugsstoff beispielsweise um Neopren handeln. Damit der Bezugsstoff der konkaven Form des Sitzes in Gebrauchslage folgt, können Rückspannsysteme, insbesondere Abnäher, vorgesehen sein, die zwischen den Modulen verlaufen und am Trägerelement befestigt sind. Alternativ können die Abnäher auch mit dem Verstärkungselement verbunden sein. Der Bezugsstoff kann auch unter Bildung einer Schlaufe als Abnäher dienen. Vorzugsweise ist der Bezugsstoff, der das Sitzteil und das Lehnenteil verkleidet, randseitig an der erfindungsgemäßen Einheit fixiert. Der Bezugsstoff kann in einer weiteren Alternative auf der Umhüllung beflockt sein oder mit in der Umhüllung integriert sein. Im letztgenannten Fall sind keine Abnäher zwischen den Modulen notwendig. Bei dieser Lösung können sich jedoch nachteiligerweise Falten auf der Oberfläche des Moduls in der Nichtgebrauchslage, bei der das Modul evakuiert ist, bilden.

Falls mehrere Module die Sitzfläche bzw. die Lehnenfläche bei dem Sitzteil bzw. bei dem Lehnenteil bilden, ist es bei einer Alternative der Erfindung von Vorteil, die einzelnen Module in ihren Freiheitsgraden zum Ausgleich von beispielsweise Toleranzen einstellen zu können. Hierzu bietet es sich beispielsweise an auf dem Trägerelement Stellelemente anzuordnen, die in Kontakt bzw. in Verbindung mit den einzelnen Modulen sind, wodurch die Module in die gewünschte Position verstellt werden können. Bei den Stellelementen kann es sich beispielsweise um Keile, Distanzstücke usw. handeln.

Vorzugsweise ist ein Kompressor über eine Druckleitung mit der aufblasbaren Einheit, insbesondere mit dem Modul verbunden. Der Kompressor fördert hierbei beim Aufblasen der Einheit Luft mit einem hohen Druck über die Leitung in jedes einzelne Modul. Zwischen dem Kompressor und dem Modul kann in einer bevorzugten Ausführungsform ein Druckluftspeicher angeordnet sein. Beim Evakuieren der Luft aus der erfindungsgemäßen Einheit kann die gleiche Druckleitung benutzt werden.

Vorzugsweise wird hier ein Kompressor verwendet der die Pumprichtung umkehren kann. In einer weiteren Alternative kann zwischen dem Modul Und dem Kompressor ein Vakuumbehälter angeordnet sein. Dieser Behälter dient vorzugsweise dazu ein schnelles Entleeren der erfindungsgemäßen Einheil zu realisieren. Diese Behälter können unterschiedlich innerhalb des Kraftfahrzeuges untergebracht sein, z.B. im Kofferraum, als integriertes Bauteil an der Karosserie (Schwelle, Boden) usw.

Zur Steuerung des Druckes innerhalb des jeweiligen Moduls kann ein Steuergerät vorgesehen sein, dass die notwendige Druckverteilung über Steuerventile regelt. Über das Steuergerät kann der Druck innerhalb der Module so gesteuert werden, dass der Komfort beispielsweise gewichts- oder fahrsituationsabhängig beeinflusst werden kann. Insbesondere kann zum Beispiel bei Kurvenfahrten das kurvenäußere Modul der erfindungsgemäßen Einheit mit einem höheren Druck beaufschlagt werden als das kurveninnere Modul, so dass auf diese Weise eine aufrechte Sitsposition des Insassen begünstigt werden kann. Weiterhin können Ermüdungserscheinungen bei längeren Fahrten durch eine Massagefunktion, bei der das Steuergerät Druckvariationen in den einzelnen Modulen bewirkt, vorgebeugt werden.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im einzelnen beschrieben sind. Dabei können die in den Ansprüchen und in der Beschreibung erwähnten Merkmale jeweils einzeln für Sich oder in beliebiger Kombination erfindungswesentlich sein. Es zeigen:
- Figur 1: eine erfindungsgemäße aufblasbare Einheit, die an einem Trägerelement angeordnet ist,
- Figur 2: die aufblasbare Einheit, die als Sitzteil und als Lehnenteil ausgebildet ist,
- Figur 3: eine weitere Ausführungsform der aufblasbaren Einheit an einem Trägerelement,
- Figur 4: eine schematische Darstellung der Anordnung eines Kompressors sowie eines Vakuumtankeb innerhalb des Kraftfahrzeuges und
- Figur 5: das Sitzteil und das Lehnenteil gemäß Figur 2 in einem aufgeblasenen Zustand (Gebrauchslage).

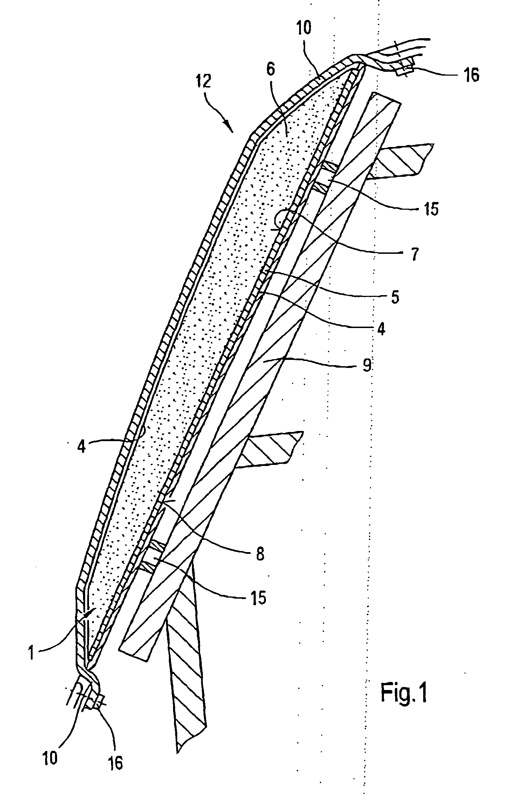

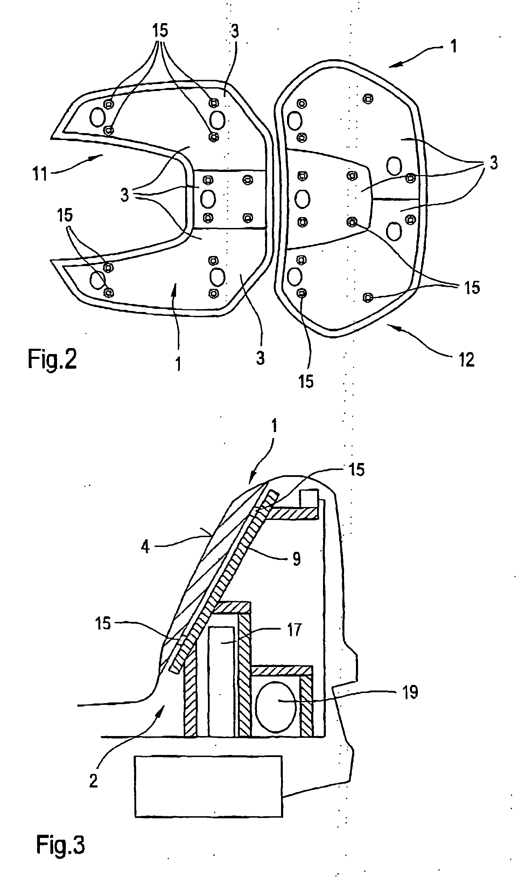

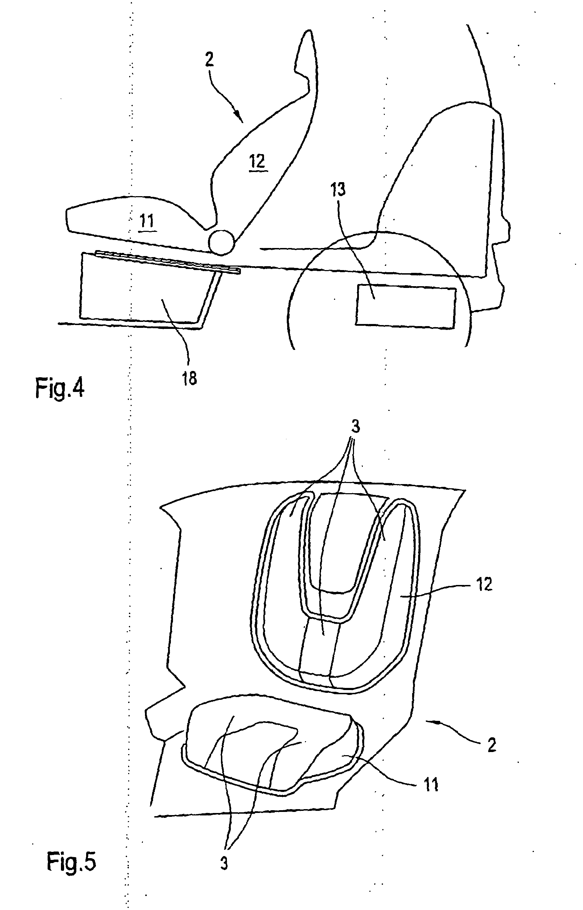

Figur 1 zeigt eine Schnittansicht einer erfindungsgemäßen aufblasbaren Einheit 1, die an einem Trägerelement 9 durch eine Schraubverbindung 15 befestigt ist. Das Trägerelement 9 ist in einem bestimmten Winkel geneigt ausgerichtet und stellt exemplarisch ein Lehnenteil 12 eines Kraftfahrzeugsitzes 2 dar. Die aufblasbare Einheit 1 weist mehrere Module 3 (Kammern) auf, die in Figur 3 bzw. Figur 5 verdeutlicht sind. In diese Module 3 kann Luft geleitet werden, um eine Gebrauchslage, das bedeutet eine Sitzfläche oder eine Anlehnfläche zu erhalten. Falls der Raum innerhalb des Kraftfahrzeuges anderweitig genutzt werden soll, beispielsweise für einen Transport, wird die Luft aus der Einheit 1, insbesondere aus allen Modulen 3 entnommen, so dass die aufblasbare Einheit 1 in Nichtgebrauchslage des Sitzes 2 ein minimales Volumen innerhalb des Fahrzeuginnenraümes einnimmt.

Das Modul 3 weist eine Umhüllung 4 auf, die im vorliegenden Ausführungsbeispiel eine Kunststofffolie ist. Innerhalb der Umhüllung 4 ist ein Verstärkungselement 5 aus Metall und ein Schaumstoff 6 angeordnet. Die Umhüllung 4 umfasst somit das verstärkungselement 5 sowie den Schaumstoff 6. Das Verstärkungselement 5 ist des Weiteren mit Vertiefungen (die nicht dargestellt sind) ausgebildet, in die der Schaumstoff 6 in Nichtgebrauchslage, d. h. wenn die Luft aus der erfindungsgemäßen Einheit 1 vollständig evakuiert ist, zumindest teilweise aufgenommen ist. In Gebrauchslage weist hierbei der Schaumstoff 6 eine dreidimensionale Form (Konkav) auf- Die geometrische Form der Vertiefung ist erfindungsgemäß dieser dreidimensionalen Form angepasst, so dass im evakuierten Zustand die Form des Schaumstoffes 6 zuverlässig von der oder den Vertiefungen aufgenommen werden kahn. Auf der Außenseite der Umhüllung 4 liegt ein Bezugsstoff 10 an, der randseitig an der Verkleidung durch eine Schraubenverbindung 16 fixiert ist. Das Verstärkungselement 5 ist mit einer ersten 7 und einer zweiten Seite 8 ausgebildet, wobei die zweite Seite 8 unmittelbar an der Umhüllung 4 anliegt und die erste Seite 7 dem Schaumstoff 6 zugewandt ist. Der Schaumstoff 6 ist im dargestellten Ausführungsbeispiel an der Innenwandung der Umhüllung 4 verklebt. Die zweite Seite 8 des Verstärkungselementes 5 ist ebenfalls mit der Umhüllung 4 verklebt. Andere Verbindungsmöglichkeiten sind selbstverständlich denkbar.

Wie Figur 2 verdeutlicht, kann die aufblasbare Einheit 1 als Sitzteil 11 oder als Lehnenteil 12 eines Kraftfahrzeugssitzes ausgebildet sein. Das Sitzteil 11 sowie das Lehnenteil 12 sind im vorliegenden Ausführungsbeispiel mit jeweils drei Modulen 3 ausgebildet. Hierbei wird jedes Modul 3 über Schraubenverbindungen 15 am Trägerelement 9 befestigt. Die Gebrauchslage des in Figur 2 dargestellten Sitzteiles 11 bzw. des Lehnenteils 12 ist in Figur 5 exemplarisch dargestellt.

Figur 3 und Figur 4 zeigen die erfindungsgemäße Einheit 1, die mit einem Kompressor 17, der auch als Vakuumpumpe arbeiten kann, verbunden ist: Hierbei ist der Kompressor 17 unterhalb des Fahrzeugbodens angeordnet. Der Vakuumtank 18 bildet im dargestellten Ausführungsbeispiel funktionsintegriert die Fahrzeugsitzkonsole. Figur 3 zeigt exemplarisch die Anordnung eines Drucklufttankes 19 sowie eines Ventilblockes 17 am Trägerelement 9.

### Bezugszeichenliste

- 1: aufblasbare Einheit
- 2: Sitz
- 3: Modul
- 4: Umhüllung
- 5: verstärkungsplatte
- 6: Schaumstoff
- 7: erste Seite
- 8: zweite Seite
- 9: Trägerelement
- 10: Bezugstoff
- 11: sitzteil
- 12: Lehnenteil
- 13: Kompressor
- 14: Druckluftspeicher
- 15: schraubenverbindung
- 16: Schraubenverbindung
- 17: Ventilblock
- 18: vakuumtank
- 19: Drucklufttank

## Patentansprüche

1. Aufblasbare Einheit (1) für einen Sitz (2), insbesondere für einen Kraftfahrzeugsitz mit mindestens einem Modul (3) mit einer Umhüllung (4), wobei in Gebrauchslage die Umhüllung (4) mit einem Fluid, insbesondere mit Luft, gefüllt ist, und in einer Nichtgebrauchslage die Umhüllung (4) fluidlos ist, **dadurch gekennzeichnet, dass** in der Umhüllung (4) ein Verstärkungselement (5) und ein Schaumstoff (6) angeordnet sind, und das Verstärkungselement (5) mit mindestens einer Vertiefung ausgebildet ist, in der der Schaumstoff (6) in Nichtgebrauchslage zumindest teilweise aufgenommen ist.

2. Aufblasbare Einheit (1) nach Anspruch 1, **dadurch gekennzeichnet, dass** die Umhüllung (4) eine Folie ist.

3. Aufblasbare Einheit (1) nach Anspruch 2, **dadurch gekennzeichnet, dass** die Folie (4) aus:Kunststoff, insbesondere aus Polyurethan, besteht.

4. Aufblasbare Einheit (1) nach einem der genannten Ansprüche, **dadurch gekennzeichnet, dass** das Verstärkungselement (5) eine erste (7) und eine zweite Seite (8) aufweist, wobei die zweite Seite (8) unmittelbar an der Umhüllung (4) anliegt und die erste Seite (7) dem Schaumstoff (6) zugewandt ist.

5. Aufblasbare Einheit (1) nach einem der genannten Ansprüche, **dadurch gekennzeichnet, dass** der Schaumstoff (6) offenporig ausgebildet ist.

6. Aufblasbare Einheit (1) nach einem der genannten Ansprüche, **dadurch gekennzeichnet, dass** der Schaumstoff (6) ein Polyurethan ist.

7. Aufblasbare Einheit (1) nach einem der genannten Ansprüche, **dadurch gekennzeichnet, dass** der Schaumstoff (6) durch eine Klebverbindung mit der Umhüllung (4) verbunden ist.

8. Aufblasbare Einheit (1) nach einem der genannten Ansprüche, **dadurch gekennzeichnet, dass** die zweite Seite (8) des VerstärkungselemenLes (5) mit der Umhüllung (4) verklebt ist.

9. Aufblasbare Einheit (1) nach einem der genannten Ansprüche, **dadurch gekennzeichnet, dass** das Verstärkungselement (5) aus einem Kunststoff oder aus einem Metall ausgebildet ist.

10. Aufblasbare Einheit (1) nach einem der genannten Ansprüche, **dadurch gekennzeichnet, dass** die zweite Seite (8) des Verstärkungselementes (5) an einem Trägerelement (9) formschlüssig und/oder kraftschlüssig und/oder stoffschlüssig befestigbar ist.

11. Aufblasbare Einheit (1) nach einem der genannten Ansprüche, **dadurch gekennzeichnet, dass** der Schaumstoff (6) und die Umhüllung (4) in Gebrauchslage eine dreidimensionale Form aufweisen.

12. Aufblasbare Einheit (1) nach einem der genannten Ansprüche, **dadurch gekennzeichnet, dass** auf der Umhüllung (4) ein Bezugssloff (10) angeordnet ist.

13. Aufblasbare Einheit (1) nach einem der genannten Ansprüche, **dadurch gekennzeichnet, dass** der Bezugstoff (10) in der Umhüllung (4) integriert ist.

14. Aufblasbare Einheit (1) nach einem der genannten Ansprüche, **dadurch gekennzeichnet, dass** die erste Seite (7) des Verstärkungselementes (5) mehrere Ebenen aufweist, deren Ausrichtung durch stellelemente einstellbar sind.

15. Aufblasbare Einheit (1) nach einem der genannten Ansprüche, **dadurch gekennzeichnet, dass** die Einheit (1) in Gebrauchslage als Sitzteil (11) oder als Lehnenteil (12) eines Kraftfahrzeugsitzes (2) ausgebildet ist.

16. Aufblasbare Einheit (1) nach Anspruch 15, **dadurch gekennzeichnet, dass** das Sitzteil (11) und das Lehnenteil (12) einteilig ausgebildet sind.

17. Aufblasbare Einheit (1) nach einem der genannten Ansprüche, **dadurch gekennzeichnet, dass** ein Kompressor (13) über eine Leitung mit dem Modul (3) verbunden ist.

18. Aufblasbare Einheit (1) nach Anspruch 17, **dadurch gekennzeichnet, dass** zwischen dem Kompressor (13) und dem Modul (3) ein Druckluftspeicher (14) angeordnet ist.

19. Aufblasbare Einheit (1) nach einem der genannten Ansprüche, **dadurch gekennzeichnet, dass** eine Pumpe über eine Leitung mit dem Modul (3) verbunden ist.

20. Aufblasbare Einheit. (1) nach Anspruch 19, **dadurch gekennzeichnet, dass** zwischen der Pumpe und dem Modul (3) ein Vakuumbehälter angeordnet, ist.

21. Aufblasbare Einheit (1) nach einem der genannten Ansprüche, **dadurch gekennzeichnet, dass** ein Steuergerät den Druck innerhalb des Moduls (3) steuert.

22. Kraftfahrzeug mit einer aufblasbaren Einheit nach einem der genannten Ansprüche.

## Claims

1. Inflatable unit (1) for a seat (2), in particular for a motor vehicle seat, with at least one module (3) with a casing (4), wherein in the position of use the casing (4) is filled with a fluid, in particular with air, and in a position of non-use the casing (4) is without fluid, **characterised in that** a reinforcing element (5) and a foam material (6) are arranged in the casing (4), and the reinforcing element (5) is configured with at least one cavity, in which the foam material (6) is at least partially received in the position of non-use.

2. Inflatable unit (1) according to claim 1, **characterised in that** the casing (4) is a foil.

3. Inflatable unit (1) according to claim 2, **characterised in that** the foil (4) is made of plastic, in particular polyurethane.

4. Inflatable unit (1) according to one of the preceding claims, **characterised in that** the reinforcing element (5) has a first (7) and a second side (8), wherein the second side (8) abuts directly against the casing (4) and the first side (7) is directed towards the foam material (6).

5. Inflatable unit (1) according to one of the preceding claims, **characterised in that** the foam material (6) is open-pored.

6. Inflatable unit (1) according to one of the preceding claims, **characterised in that** the foam material (6) is a polyurethane.

7. Inflatable unit (1) according to one of the preceding claims, **characterised in that** the foam material (6) is joined to the casing (4) by an adhesive joint.

8. Inflatable unit (1) according to one of the preceding claims, **characterised in that** the second side (8) of the reinforcing element (5) is adhered to the casing (4).

9. Inflatable unit (1) according to one of the preceding claims, **characterised in that** the reinforcing element (5) is made from a plastic or a metal.

10. Inflatable unit (1) according to one of the preceding claims, **characterised in that** the second side (8) of the reinforcing element (5) can be fastened to a support element (9) by positive-locking and/or frictional and/or integral connection.

11. Inflatable unit (1) according to one of the preceding claims, **characterised in that** the foam material (6) and the casing (4) have a three-dimensional shape in the position of use.

12. Inflatable unit (1) according to one of the preceding claims, **characterised in that** a covering material (10) is arranged on the casing (4).

13. Inflatable unit (1) according to one of the preceding claims, **characterised in that** the covering material (10) is integrated in the casing (4).

14. Inflatable unit (1) according to one of the preceding claims, **characterised in that** the first side (7) of the reinforcing element (5) has a plurality of planes, the orientation of which is adjustable by means of adjusting elements.

15. Inflatable unit (1) according to one of the preceding claims, **characterised in that** in the position of use the unit (1) is configured as a seat part (11) or as a backrest part (12) of a motor vehicle seat (2).

16. Inflatable unit (1) according to claim 15, **characterised in that** the seat part (11) and the backrest part (12) are configured in one piece.

17. Inflatable unit (1) according to one of the preceding claims, **characterised in that** a compressor (13) is connected to the module (3) by means of a conduit.

18. Inflatable unit (1) according to claim 17, **characterised in that** a compressed air storage means (14) is arranged between the compressor (13) and the module (3).

19. Inflatable unit (1) according to one of the preceding claims, **characterised in that** a pump is connected to the module (3) by means of a conduit.

20. Inflatable unit (1) according to claim 19, **characterised in that** a vacuum container is arranged between the pump and the module (3).

21. Inflatable unit (1) according to one of the preceding claims, **characterised in that** a control device controls the pressure within the module (3).

22. Motor vehicle with an inflatable unit according to one of the preceding claims.

## Revendications

1. Ensemble gonflable (1) pour un siège (2), en particulier pour un siège de véhicule automobile, avec au moins un module (3), avec une enveloppe (4), sachant que, lorsque l'on est en position d'utilisation, l'enveloppe (4) est remplie d'un fluide, en particulier d'air, et lorsqu'on est dans une position de non utilisation, l'enveloppe est sans fluide, **caractérisé en ce que** dans l'enveloppe (4) est disposé un élément de renforcement (5) et un matériau alvéolaire (6) et **en ce que** l'élément de renforcement (5) est réalisé avec au moins une cavité, dans laquelle le matériau alvéolaire (6) est logé au moins partiellement lorsqu'on est dans la position de non utilisation.

2. Ensemble gonflable (1) selon la revendication 1, **caractérisé en ce que** l'enveloppe (4) est une feuille.

3. Ensemble gonflable (1) selon la revendication 2, **caractérisé en ce que** la feuille (4) est formée de matière synthétique, en particulier de polyuréthane.

4. Ensemble gonflable (1) selon l'une des revendications citées, **caractérisé en ce que** l'élément de renforcement (5) présente une première (7) et une deuxième face (8), la deuxième face (8) étant en appui directement sur l'enveloppe (4) et la première face (7) étant tournée vers le matériau alvéolaire (6).

5. Ensemble gonflable (1) selon l'une des revendications citées, **caractérisée en ce que** le matériau alvéolaire (6) est à pores ouverts.

6. Ensemble gonflable (1) selon l'une des revendications citées, **caractérisé en ce que** le matériau alvéolaire (6) est un polyuréthane.

7. Ensemble gonflable (1) selon l'une des revendications citées, **caractérisé en ce que** le matériau alvéolaire (6) est relié à l'enveloppe (4) par une liaison par collage.

8. Ensemble gonflable (1) selon l'une des revendications citées, **caractérisé en ce que** la deuxième face (8) de l'élément de renforcement (5) est collée à l'enveloppe (4).

9. Ensemble gonflable (1) selon l'une des revendications citées, **caractérisé en ce que** l'élément de renforcement (5) est formé d'une matière synthétique ou d'un métal.

10. Ensemble gonflable (1) selon l'une des revendications citées, **caractérisé en ce que** la deuxième face (8) de l'élément de renforcement (5) est susceptible d'être fixée sur un élément support (9) par une liaison par ajustement de forme et/ou par interaction de force et/ou par une liaison par la matière.

11. Ensemble gonflable (1) selon l'une des revendications citées, **caractérisé en ce que** le matériau alvéolaire (6) et l'enveloppe (4) présentent, en position d'utilisation, une forme tridimensionnelle.

12. Ensemble gonflable (1) selon l'une des revendications citées, **caractérisé en ce qu'**un matériau de revêtement (10) est disposé sur l'enveloppe (4).

13. Ensemble gonflable (1) selon l'une des revendications citées, **caractérisé en ce que** le matériau de revêtement (10) est intégré dans l'enveloppe (4).

14. Ensemble gonflable (1) selon l'une des revendications citées, **caractérisé en ce que** la première face (7) de l'élément de renforcement (5), présente plusieurs plans dont les orientations sont réglables par des éléments de réglage.

15. Ensemble gonflable (1) selon l'une des revendications citées, **caractérisé en ce que** l'ensemble (1) en position d'utilisation est réalisé sous forme de partie d'assise (11) ou sous forme de partie de dossier (12) d'un siège de véhicule automobile (2).

16. Ensemble gonflable (1) selon la revendication 15, **caractérisé en ce que** l'assise (11) et la partie de dossier (12) sont réalisées d'une seule pièce.

17. Ensemble gonflable (1) selon l'une des revendications citées, **caractérisé en ce qu'**un compresseur (13) est relié au module (3) par une conduite.

18. Ensemble gonflable (1) selon la revendication 17, **caractérisé en ce qu'**un accumulateur d'air comprimé (14) est disposé entre le compresseur (13) et le module (3).

19. Ensemble gonflable (1) selon l'une des revendications citées, **caractérisé en ce qu'**une pompe est reliée au module (3) par une conduite.

20. Ensemble gonflable (1) selon la revendication 19, **caractérisé en ce qu'**un réservoir de dépression est disposé entre la pompe et le module (3).

21. Ensemble gonflable (1) selon l'une des revendications citées, **caractérisé en ce qu'**un appareil de commande contrôle la pression à l'intérieur du module (3).

22. Véhicule automobile muni d'un ensemble gonflable selon l'une des revendications citées.
